# EUROPÄISCHE PATENTSCHRIFT

(11) **EP 0 670 646 B1**
(45) Veröffentlichungstag und Bekanntmachung des Hinweises auf die Patenterteilung: **04.06.1997**
(21) Anmeldenummer: 94120657.5
(22) Anmeldetag: 24.12.1994
(51) Int. Cl.: H04L 9/32, G07F 7/10

(54) **Verfahren zur gegenseitigen Authentikation**
Mutual authentication method
Procédé d'authentification mutuelle

(30) Priorität: 01.03.1994 DE 4406601
(43) Veröffentlichungstag der Anmeldung: 06.09.1995
(73) Patentinhaber: DEUTSCHE BUNDESPOST TELEKOM, 53105 Bonn (DE)
(72) Erfinder: Kowalski, Bernd, Dipl.-Ing., D-57072 Siegen (DE); Stolz, Helmut, Dipl.-Ing., D-57080 Siegen-Eisern (DE); Nehl, Roland, Dr., D-35789 Weilmünster-1 (DE)

(56) Entgegenhaltungen:
- EP-A- 0 252 849
- GB-A- 2 227 111
- ADVANCES IN CRYPTOLOGY-AUSCRYPT'90, PROCEEDINGS OF THE INTERNATIONAL CONFERENCE ON CRYPTOLOGY, 8. Januar 1990, BERLIN (DE) Seiten 46 - 57 JOONG LEE 'SECURE USER ACCESS CONTROL FOR PUBLIC NETWORKS'
- COMPUTER, Bd.25, Nr.1, Januar 1992, LOS ALAMITOS ,CA, (US) Seiten 39 - 52 WOO ET AL. 'AUTHENTICATION FOR DISTRIBUTED SYSTEMS'

## Beschreibung

Die Erfindung betrifft ein Verfahren zur gegenseitigen Authentikation der im Oberbegriff des Patentanspruch 1 näher bezeichneten Art, wie sie z.B. in Advances in Cryptology, AUSCRYPT'90', International Conference on Cryptology, Seiten 46-57: JOONG LEE: 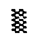 Secure User Access Control for Public Networks 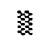 für zwei Partner beschrieben ist.

Solche kryptografisch gestützte Authentikationsverfahren, z.B. gemäß CCITT Empfehlung X.509, arbeiten allgemein nach der "Challenge-Response" Methode. Soll zwischen zwei kommunizierenden Parteien eine gegenseitige Authentikation erfolgen, so sendet jede der Parteien der jeweils anderen eine sitzungsspezifische Zufallszahl zu, welche diese mit einem sie identifizierenden (und persönlich zugeordneten) kryptografischen Schlüssel verschlüsselt ("unterschreibt") und zur Verifikation zurücksendet.

Die beschriebene gegenseitige Authentikation wird über den Austausch von Token abgewickelt, welche den funktionalen Teil des zugehörigen Sicherheitsprotokolls bilden. Im Rahmen dieser Authentikations-Token wird in der Regel auch ein geheimer Schlüssel zwischen den kommunizierenden Parteien vereinbart, mit dessen Hilfe beide Parteien nach erfolgreicher gegenseitiger Authentikation ihren anschließenden Dialog verschlüsseln. Damit wird auch der nachfolgende Dialog gegen Angriffe von dritter Seite geschützt und damit insoweit für die kommunizierenden Parteien authentisch.

Das oben erwähnte Authentikationsverfahren wird üblicherweise so realisiert, daß die zu authentifizierenden Parteien A und B, welche in der Regel Personen sind, ihre Identitätsnachweise in Form von Identifikatoren (z.B. Zertifikate) und geheimen persönlichen Schlüssel auf einer CPU-Chipkarte erhalten.

Die Verschlüsselung des Dialoges (z.B. eines Telefongespräches, einer Videokonferenz oder einer Datenkommunikation) zwischen den kommunizierenden Parteien A und B erfolgt über je ein schnelles Verschlüsselungsmodul SM-A und SM-B in den beiden Endgeräten, weil dafür der Verschlüsselungsdurchsatz der Chipkarte meistens aus normungstechnischen Gründen nicht ausreichen würde.

Üblicherweise wird bei der Implementation einer solchen Konfiguration das eigentlich für die kommunizierenden Parteien A und B vorgesehene Authentikationsprotokoll einfach zwischen den Verschlüsselungsmodulen SM-A und SM-B abgewickelt. Dabei muß der geheime Schlüssel der Parteien relativ ungeschützt von den Chipkarten zu deren Verschlüsselungsmodulen übermittelt und dort nach Sitzungsende wieder gelöscht werden. Daraus resultieren einige bisher unbefriedigend berücksichtigte Probleme:

Bei der Unterstützung von Authentikationsprozessen zwischen Chipkarten oder ähnlich langsamen Moduln als Sicherheitskomponenten durch schnelle Verschlüsselungsmodule werden geheime Schlüssel ungeschützt und/oder nicht authentisch von den langsamen Moduln in die schnellen Verschlüsselungsmodule transferiert. Die eigentliche Authentikation übernimmt das schnelle Verschlüsselungsmodul dann unkontrolliert, quasi "stellvertretend" für das langsame Modul.

Nachteilig für den so Authentifizierten ist, daß er den eigentlichen Authentikationsprozeß aus rein implementationsspezifischen Gründen nicht mehr kontrollieren kann und so mit seinem geheimen Schlüssel sein wichtigstes Geheimnis aus der Hand gibt und es dem schnellen Verschlüsselungsmodul SM ermöglicht, zu beliebigen späteren Zeitpunkten beliebig viele mißbräuchliche Authentikationen in seinem Namen durchzuführen.

In vielen Fällen wird der erwähnte Authentikationsprozeß zwischen Mensch und Maschine, z.B. zwischen Operator und Host, durchgeführt. Auf Host-Seite muß für den Identitätsnachweis eine automatische Instanz quasi die Konfiguration eines fest mit einer fiktiven Chipkarte verbundenen schnellen Verschlüsslers nachbilden. Die Betriebsweise solcher mit Authentikationsverfahren ausgestatteter Endsysteme kann nur lokal, von Hand und ungesichert umgestellt werden. Es gibt derzeit kein sicheres und zur üblichen Mensch zu Mensch Kommunikation passendes Authentikationsverfahren für einen derartigen automatischen bzw. teilautomatischen Betrieb.

Die Aufgabe der Erfindung besteht in der Überwindung dieser aufgeführten Probleme.

Diese Aufgabe wird erfindungsgemäß in der im Kennzeichen des Patentanspruchs 1 beschriebenen Art gelöst.

Vorteilhafte Weiterbildungsmöglichkeiten dieser Verfahrensweise sind in den Kennzeichen der Patentansprüche 2 und 3 beschrieben.

Eine nähere Erklärung des Verfahrens nach der Erfindung nebst Wirkungsweise und Vorteilen ist den nachfolgenden Ausführungsbeispielen entnehmbar. In den zugehörenden Zeichnungen zeigen die:
Fig. 1 ein allgemeines Verfahrensschema,
Fig. 2 ein für Automatikbetrieb erweitertes Schema und
Fig. 3 eine Variante des Verfahrensschemas.

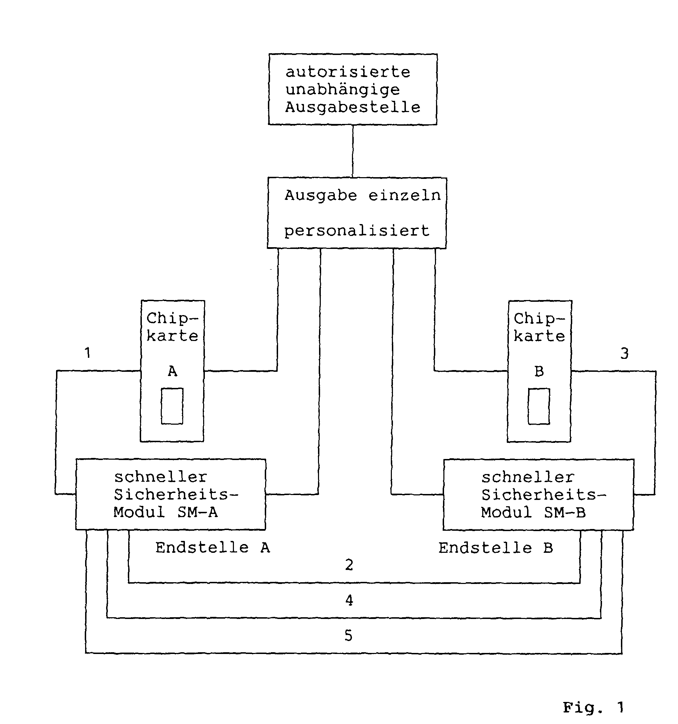

Die Chipkarten A und B und die Verschlüssler SM-A und SM-B werden, wie Fig 1 zeigt, von einer vertrauenswürdigen Ausgabestelle personalisiert und mit einem Zertifikat versehen und zwar unabhängig von der Tatsache, daß die Chipkarte direkt vom Menschen benutzt wird, der Verschlüssler jedoch automatisch arbeitet.

Die Chipkarte des Partners A und der Verschlüssler SM-A authentifizieren sich gegenseitig und erzeugen dabei eine sitzungsspezifische Zufallszahl 1.

Danach ruft das SM-A das SM-B zur Einleitung einer gegenseitigen Authentikation 2 auf. Zunächst muß das SM-B mit der Chipkarte des Partners B ebenfalls eine gegenseitige Authentikation 3 durchführen. Erst dann führen SM-A und SM-B ihre gegenseitige Authentikation 4 und 5 durch. Durch ihre Token werden außerdem gesicherte Informationen über die am Gesamtprozeß beteiligten Partner A und B zwischen beiden Endsystemen ausgetauscht.

Bei dem beschrieben Verfahren verläßt der geheime Authentikationsschlüssel niemals das personalisierte Modul. Dies gilt für alle Arten von Identitätsnachweisen wie z.B. Chipkarten, wie auch für Verschlüssler.

Chipkarten und Verschlüssler unterscheiden sich hinsichtlich ihrer Ausstattung mit Personalisierungsdaten nicht.

Das jeweilige Endsystem kann jede der am Authentikationsprozeß beteiligten Parteien sitzungsindividuell identifizieren.

Bei den Weiterbildungen des Verfahren ist auf Besonderheiten der beteiligten Parteien zusätzlich Rücksicht genommen.

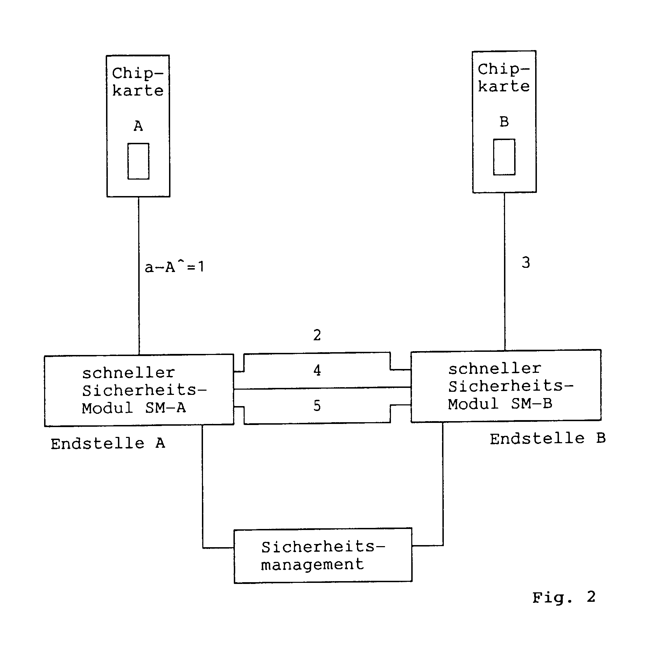

Ist z.B. bei der Partei A ein Chipkartenbetrieb nicht vorgesehen, so arbeiten Chipkarte B und SM-B auf der einen Seite jeweils nur mit dem SM-A auf der anderen Seite zusammen. Das in Fig. 2 gezeigte erweiterte Verfahren funktioniert ähnlich wie das oben beschriebene.

Zusätzlich ist dabei aber vorgesehen, daß alle Verschlüssler in ihrer Betriebsweise auf Chipkartenbetrieb oder auf Betrieb ohne Chipkarte (automatischer Betrieb) umgeschaltet werden können.

Die jeweilige Betriebsweise wird von der Partei A über den entsprechenden Konfigurationsfile des Endsystems durch den Chipkarteneinsatz a-A eingestellt.

Eine zweite Weiterbildung des Verfahrens besteht darin, daß das die Schnittstelle zur Chipkarte und den Verschlüssler beinhaltende Endsystem mit folgenden Zusatzmerkmalen ausgestattet wird:

Eine Konfigurationsdatei ermöglicht die Ferneinstellung der Sicherheitsparameter, insbesondere die Ein- und Ausschaltung des beschriebenen automatischen Betriebes durch das Sicherheitsmanagement.

Eine Rechteverwaltungsdatei nimmt per Ferneinstellung durch das Sicherheitsmanagement eine Liste verschiedener, bestimmten Benutzern vorbehaltenen Benutzerprofile (Zugriffsrechte) auf.

Eine Auditing-Datei protokolliert die Zugänge zum Endsystem und liefert sie per Fernabfrage an das Sicherheitsmanagement ab.

Die Kommunikation des Endsystems mit dem Sicherheitsmanagement-System erfolgt gesichert über das oben beschriebene auch für die gegenseitige Partner A/B Authentikation vorgesehene Verfahren und bedient sich dabei z.B. auch der gleichen Kommunikations-Schnittstelle.

Diese Endsysteme sind daher über ein zentrales Sicherheitsmanagement erreichbar und können auch von dort aus fernkonfiguriert und -betrieben werden. Auch die Fern-Übermittlung von Benutzerprofilen, sowie der Fern-Abruf von Auditing-Daten ist möglich.

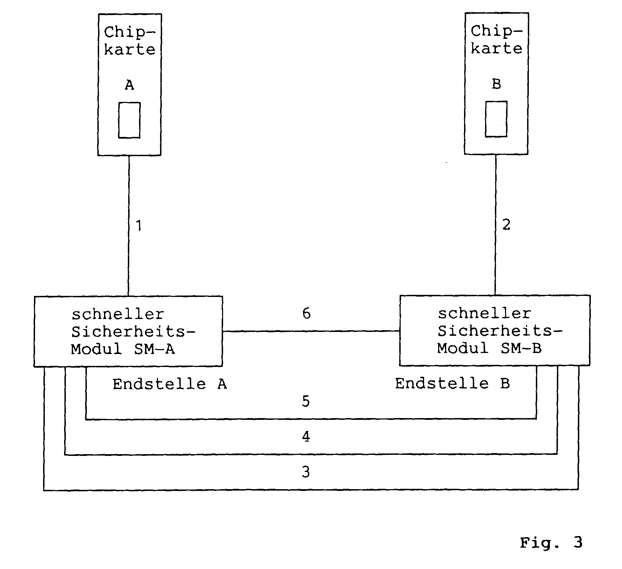

In der in Fig. 3 dargestellten Variante des Verfahrens werden die Chipkarten A und B und die schnellen Sicherheitsmodule SM-A und SM-B von einer vertrauenswürdigen Person personalisiert.

Damit die schnellen Sicherheitsmodule SM-A bzw. SM-B überhaupt eine Verbindung aufnehmen, muß eine gegenseitige Authentikation von den jeweiligen Chipkarten A: 1 bzw. B: 2 erfolgen. Bei dieser Authentikation wird jeweils eine sitzungsspezifische Zufallszahl verwendet.

Danach ruft 3 der schnelle Sicherheitsmodul SM-A den schnellen Sicherheitsmodule SM-B auf und teilt den Verbindungsaufbauwunsch mit und sendet die Zertifikate von Chipkarte A und SM-A mit.

Falls der schnelle Sicherheitsmodul SM-B bzw. Chipkarte B (der Besitzer von B) den Verbindungsaufbauwunsch akzeptieren, senden diese 4 die Zertifikate von Chipkarte B und SM-B sowie eine verschlüsselte Zufallszahl Z1.

Danach sendet SM-A einen Token 5, der von SM-A und Chipkarte A unterschrieben ist, und der verschlüsselt den Sitzungsschlüssel, die Zufallszahl Z1, sowie eine neue Zufallszahl Z2 zur Authentikation enthält.

SM-B antwortet 6, nachdem eine Entschlüsselung des Token 5 stattfand, die Zufallszahl Z2 zurück und weist sich somit als authentisch aus.

## Patentansprüche

1. Verfahren zur gegenseitigen Authentikation, bei dem sich die beiden kommunizierenden Parteien (A;B) gegenseitig zuerst mittels Token eine sitzungsspezifische Zufallszahl zusenden und diese, mit einem sie (A bzw. B) identifizierenden kryptografischen Schlüssel verknüpfen, zur Verifikation zurücksenden, wobei ein geheimer Schlüssel für den anschließenden Dialog vereinbart wird und wobei beiderseits personalisierte Identitatsnachweise von A bzw. B und schnelle Verschlüsselungsmodule (SM-A; SM-B) verwendet werden, **dadurch gekennzeichnet**, daß die Verschlüsselungsmodule (SM-A bzw. SM-B) von einer unabhängigen Ausgabestelle vor der Ausgabe bzw. Einsatz personalisiert werden, sich zuerst auf der Endstelle der ersten Seite (A mit SM-A) und danach auch auf der zweiten Seite (B mit SM-B) gegenseitig authentifizieren und daß erst danach die beiden Verschlüsselungsmodule (SM-A und SM-B) ihre gegenseitige Authentikation durchführen, daß bei einer dieser Authentikationen zwischen den beiden Verschlüsselungsmodulen mittels sitzungsspezifischer Zufallszahl eine nachrichtenspezifische geheime Nachricht erzeugt wird und daß dabei gesicherte Informationen über die beiden beteiligten Partner verdeckt gebildet werden.

2. Verfahren nach Anspruch 1, dadurch gekennzeichnet, daß die sitzungsspezifische Zufallszahl vom Verschlüsselungsmodul der zweiten Seite (SM-B) gebildet und vom Verschlüsselungsmodul der ersten Seite (SM-A) bestätigt wird.

3. Verfahren nach Anspruch 1, dadurch gekennzeichnet, daß als sitzungsspezifische Zufallszahl beim akzeptieren eines Verbindungsaufbauwunsches vom Verschlüsselungsmodul der zweiten Seite (SM-B) zuerst eine erste Zufallszahl gebildet und mit Zertifikaten der ersten Seite verschlüsselt an die erste Seite (SM-A) gesendet wird, und daß danach die erste Seite (SM-A) in einem Token (5), der vom ersten Verschlüsselungsmodul (SM-A) und Identitätsnachweis (A) unterschrieben und verschlüsselt ist, mit dem Sitzungsschlüssel und der ersten Zufallszahl eine zweite Zufallszahl zur Authentikation sendet, die zuletzt vom Verschlüsselungsmodul der zweiten Seite (SM-B) nach Entschlüsselung als authentisch bestätigt wird.

4. Verfahren nach Anspruch 1 und 2, dadurch gekennzeichnet, daß der Identitätsnachweis für die Verschlüsselungsmodule der Endstellen zur gegenseitigen Authentikation wahlweise auch durch ein Sicherheitsmanagement-System durchgeführt werden kann.

5. Verfahren nach Anspruch 1, 2 und 4, dadurch gekennzeichnet, daß in den Endstellen eine Konfigurationsdatei für die Ferneinstellung durch das Sicherheitsmanagement-System, eine Rechteverwaltungsdatei für die Benutzerberechtigungen und eine Auditingdatei für die Zugangsregistrierung angelegt werden.

## Claims

1. Procedure for mutual authentication, in the course of which the two communicating parties first send each other a session-specific random number by making use of so-called ,,authentication tokensʹʹ, and then return it for the purpose of verification, together with a cryptographic key identifying themselves, where a secret key is agreed for the subsequent dialog and where entity authentication (chipcards) and high-speed encryption modules are used by either party, **being characterized by the fact** that the entity authentication (chipcards) and the encryption modules are personalized by an independent issuing authority prior to their issuance and/or use, that they first authenticate themselves mutually at the terminal of the first side, A, and then on the second side, B, that only then do the two encryption modules SM-A and SM-B perform their mutual authentication, that during one of these authentications a message-specific secret message is generated between both encryption modules by means of a session-specific random number, and that secured information on those parties involved is formed in the process.

2. Procedure according to claim 1 being characterized by the fact that the session-specific random number is formed by the encryption module SM-B of the second side and confirmed by the encryption module SM-A of the first side.

3. Procedure according to claim 1 being characterized by the fact that, during acceptance of a call setup request, a first random number Z1 is first formed as session-specific random number by the encryption module SM-B of the second side and is sent in an encrypted manner, together with the certificates of the first side, to the first side SM-A, and that afterwards, in a token (5) being signed and encrypted by the SM-A and chipcard A, the first side SM-A sends, jointly with the session key and the random number Z1, a new second random number Z2 for the purpose of authentication, which after decryption finally confirms the SM-B to be authentic.

4. Procedure according to claims 1 and 2 being characterized by the fact that the proof of identity for the encryption modules of the terminals for mutual authentication may also be furnished optionally by a security management system.

5. Procedure according to claims 1, 2 and 4 being characterized by the fact that at the terminals a configuration file for remote setting by the security management system, a rights administration file for user authorizations and an auditing file for access registration are created.

## Revendications

1. Procédé d'authentification mutuelle où les deux parties communicantes s'envoient mutuellement, moyennant de soi-disant "jetons d'authentification", d'abord un numéro aléatoire associé spécifiquement à la session en question, qu'elles renvoient ensuite muni d'une clé cryptographique identificatoire, pour le faire vérifier, en convenant en outre d'une clé secrète pour le dialogue qui suivra, et en utilisant, des deux côtés, des preuves d'identité (cartes à puce) et des modules de chiffrement rapides,
**caractérisé en ce que** les preuves d'identité (cartes à puce) et les modules de chiffrement sont, par une instance de distribution indépendante, personnalisés avant leur remise ou leur utilisation, en ce qu'ils s'identifient mutuellement d'abord à la station terminale du premier côté, A, puis, aussi du deuxième côté, B, et que ce n'est qu'après cela que les deux modules de chiffrement SM-A et SM-B procèdent à leur authentification mutuelle et en ce que, lors d'une de ces opérations d'authentification entre les deux modules de chiffrement, on produit un message secret spécifique moyennant un numéro aléatoire spécifique de la session, créant ainsi des informations sûres concernant les deux correspondants en question.

2. Procédé selon la revendication 1, **caractérisé en ce que** le numéro aléatoire spécifique de la session est créé par le module de chiffrement SM-B du deuxième côté et confirmé par le module de chiffrement SM-A du premier côté.

3. Procédé selon la revendication 1, **caractérisé en ce que**, lors de l'acceptation d'une demande d'établissement de communication, le module de chiffrement SM-B du deuxième côté crée d'abord un premier numéro aléatoire Zl que, après l'avoir chiffré avec les certificats du premier côté, il transmet au premier côté SM-A, et en ce qu'ensuite dans le but de l'authentification, le premier côté SM-A envoie, sous forme d'un jeton (5) signé et chiffré par SM-A et la carte à puce A, conjointement avec la clé de session et le numéro aléatoire Z1 un nouveau numéro aléatoire Z2, dont, finalement, après l'avoir déchiffré, SM-B confirme authenticité.

4. Procédé selon les revendications 1 et 2, **caractérisé en ce que** la preuve d'identité pour les modules de chiffrement des stations terminales en vue de l'authentification mutuelle peut facultativement être assurée par un système de management de sécurité.

5. Procédé selon les revendications 1, 2 et 4, **caractérisé en ce que** dans les stations terminales, on crée un fichier de configuration pour le réglage à distance par le système de management de sécurité, un fichier de gestion de droits pour les droits utilisateurs et un fichier de données de protocole pour l'enregistrement de l'accès.
